# EUROPEAN PATENT APPLICATION

(11) **EP 4 198 076 A1**
(43) Date of publication of application: **21.06.2023**
(21) Application number: 21214956.1
(22) Date of filing: 16.12.2021
(51) Int. Cl.: C08J 11/24, C08J 11/14, C08G 64/00, C07C 37/00, C08L 69/00, B29B 17/00, C08L 55/02

(54) **PROCESS FOR RECOVERY OF RUBBER-MODIFIED VINYL(CO)POLYMER**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a process for recovery of rubber-modified vinyl(co)polymer from a polycarbonate resin or an optionally shredded molded part made thereof wherein the polycarbonate resin comprises
A) Polycarbonate based on aromatic or aliphatic diol or mixtures thereof
B) Rubber-modified vinyl(co)polymer
wherein the process comprises the steps
i) Bringing into contact the resin or the optionally shredded molded part made thereof with at least one alcohol together with at least one transesterification catalyst to obtain a slurry (i) wherein the solid fraction of the slurry (i) comprises the polycarbonate resin or the optionally shredded molded part made thereof and the liquid fraction of the slurry (i) comprises the alcohol
ii) heating the slurry (i) to 60 to 90 °C, preferably 65 to 85 °C and keeping the temperature to obtain a slurry (ii) wherein the solid fraction of the slurry (ii) comprises rubber-modified vinyl(co)polymer and the liquid fraction of the slurry comprises aliphatic and/or aromatic diol;
iii) separating the solid fraction from the liquid fraction of the slurry (ii);
iv) optionally washing the solid fraction;
and the use of the recovered rubber-modified vinyl (co)polymer for the production of molded parts as well as blend partner in polycarbonate blends. Further optional aspects are the recovery of aromatic and/or aliphatic diol and the use of this diol for the production of polycarbonates.

## Description

The invention relates to a process for the recovery of rubber-modified vinyl (co)polymer from a polycarbonate blend resin or an optionally shredded molded part made thereof. It also relates to the use of the recovered rubber-modified vinyl (co)polymer for the production of molded parts as well as blend partner in polycarbonate blends.

Further optional aspects are the recovery of aromatic and/or aliphatic diol and the use of this diol for the production of polycarbonates.

Polycarbonate compositions for production of thermoplastic moulding compounds have long been known. The compositions and moulding compounds produced therefrom are used to produce moulded articles for a multitude of applications, for example for the automotive sector, for the construction sector and for the electronics sector.

The properties of the moulded articles produced from such thermoplastic moulding compounds can be adjusted to the demands of the respective use via the selection of the components of the compositions and the ranges of amounts in which these components are used in the compositions.

To increase notch resistance, in particular at low temperatures, blending partners having elastomeric properties are added to the polycarbonate as impact modifiers. The impact modifiers in turn may differ in the chemical composition of the elastic component or else the morphology thereof. An important class of impact modifiers are rubber-modified vinyl (co)polymers. They can be blended with polycarbonate in a compounding process and a two-phase morphology is created. In most cases the phase morphology of these polycarbonate blends is such that polycarbonate forms the matrix phase and rubber-modified vinyl (co)polymers forms domains within the matrix phase.

Amongst the rubber-modified vinyl (co)polymers styrene-acrylonitrile-copolymers (SAN) combined with polybutadiene-based rubber particles, commonly known as acrylonitrile-butadiene-styrene (ABS), are the most prominent component.

It is used on a large scale as blending partner with incorporated impact modifier for polycarbonate compositions. In this combination the rubber particles improve notched impact resistance and further mechanical properties, while SAN facilitates the melt flowability of the resulting blend with polycarbonate and hence facilitates processing to give moulded articles.

Polycarbonate resins comprising polycarbonate, rubber-modified vinyl (co)polymers and optionally further components are employed in numerous applications, but these materials are not biodegradable. Therefore, it is highly desirable to make use of polycarbonate resin waste as a source of raw materials for new products.

EP 0547479 A2 discloses a process for continuous depolymerization of polycarbonates via transesterification in a distillation column. The process is suited for recycling of polycarbonate waste.

DE 4326906 C1 discloses a process for chemical recycling of bisphenol A based polycarbonate via transesterification with hydroxy compounds and subsequent melt polymerization.

WO 2014/099548 A1 describes a method for alcoholysis of a polycarbonate-containing composition comprising a polycarbonate, flame retardant, acrylonitrile-butadiene-styrene, or a combination of the flame retardant and acrylonitrile-butadiene-styrene. The method comprises contacting the composition with a solvent that forms a solution or a filterable suspension of the components but not the polycarbonate; separating the solution or the filterable suspension from the polycarbonate and depolymerizing in a next step.

WO 2014/099594 A1 discloses a method for recovering a dihydroxy aromatic compound and a dialkyl carbonate from a polycarbonate-containing composition comprising a polycarbonate and acrylonitrile-butadiene-styrene. The method comprises depolymerizing the polycarbonate producing a dihydroxy aromatic compound and a dialkyl carbonate; removing the dihydroxy aromatic compound and the dialkyl carbonate from the reactor, the acrylonitrile-butadiene-styrene remaining as a coating on the surfaces of the reactor; adding a solvent to the reactor; and heating the solvent to remove the acrylonitrile-butadiene-styrene from the surfaces of the reactor.

The mentioned documents disclose depolymerization of polycarbonate to obtain the polycarbonate building blocks which are then suited for producing of new polycarbonates. In case ABS is present this copolymer is either separated prior to polycarbonate depolymerization or remains as coating on the reactor equipment which needs to be removed in a last step.

The ABS or rubber-modified vinyl (co)polymer is a significant fraction of the polycarbonate resin and also a valuable raw material.

It was therefore desirable to provide a process which recovers the rubber-modified vinyl (co)polymer from polycarbonate blends.

It was also desirable that the recovered rubber-modified vinyl (co)polymer has maintained its basic properties such as low glass transition temperature of the rubber phase. In this way the rubber-modified vinyl (co)polymer keeps its elastic properties and may be useful for standard applications of this material class.

It was also desirable that the process is simple and can be carried out with a few process steps only. Optionally the process should also be suited to recover the constituents of polycarbonate, in particular aromatic and/or aliphatic diol.

It was surprisingly found that
a process for recovery of rubber-modified vinyl(co)polymer from a polycarbonate resin or an optionally shredded molded part made thereof
wherein the polycarbonate resin comprises
   A) Polycarbonate based on aromatic or aliphatic diol or mixtures thereof
   B) Rubber-modified vinyl(co)polymer
wherein the process comprises the steps
   i) Bringing into contact the polycarbonate resin or the optionally shredded molded part made thereof with at least one alcohol together with at least one transesterification catalyst to obtain a slurry (i) wherein the solid fraction of the slurry (i) comprises the polycarbonate resin or the optionally shredded molded part made thereof and the liquid fraction of the slurry (i) comprises the alcohol;
   ii) heating the slurry (i) to 60 to 90 °C, preferably 65 to 85 °C and keeping the temperature to obtain a slurry (ii) wherein the solid fraction of the slurry (ii) comprises rubber-modified vinyl(co)polymer and the liquid fraction of the slurry comprises aliphatic and/or aromatic diol;
   iii) separating the solid fraction from the liquid fraction of the slurry;
   iv) optionally washing the solid fraction
achieves the technical target.

The polycarbonate resin may optionally comprise one or more polymer additives or polymeric components as component C. In a further optional step (v) the aromatic and/or aliphatic diol is separated from the liquid fraction.

In the process according to the invention polycarbonate is depolymerized by alcoholysis.

The process according to the invention can be used to recover valuable material from post-industrial waste and post-consumer waste. Post-industrial waste includes for example polycarbonate resins that did not meet the specification of the respective product. A reason may be for example deviation from the targeted color. Another source of post-industrial waste are molded parts with defects that occurred during the production via e.g. injection moulding of polycarbonate resins. Post-consumer waste includes finished molded parts collected after the lifetime of the end product. It is also possible to collect finished molded products showing deficiencies such as impaired surface quality originating during the part production by injection molding for example.

The advantage of the claimed process is the relatively low temperature allowing to maintain the property profile of the rubber-modified vinyl (co)polymer and the simple procedure wherein no laborious cleaning of the equipment such as reactor and stirrer is required. Further, the rubber-modified vinyl (co)polymer can be obtained without use of additional solvents.

### Polycarbonate resin

### Component A

A polycarbonate is employed as component A. It may comprise structural units derived from aromatic and/ or aliphatic diols. Diol may also be referred to as dihydroxy compound within the context of the present invention.

It is also possible to employ mixtures of two or more of said polycarbonates. It is particularly preferable when one or more aromatic polycarbonates are employed as component A.

Polycarbonates according to component A which are suitable according to the invention are known from the literature or can be produced by processes known from the literature (for production of aromatic polycarbonates see by way of example Schnell, "Chemistry and Physics of Polycarbonates", Interscience Publishers, 1964 and also DE-AS (German Published Specification) 1 495 626, DE-A 2 232 877, DE-A 2 703 376, DE-A 2 714 544, DE-A 3 000 610, DE-A 3 832 396)

Aromatic polycarbonates are produced by way of example by reaction of diphenols with carbonyl halides, preferably phosgene and/or with aromatic diacyl dihalides, preferably dihalides of benzenedicarboxylic acids, by the interfacial process, optionally using chain terminators, for example monophenols, and optionally using trifunctional or more than trifunctional branching agents, for example triphenols or tetraphenols. Production via a melt polymerization process by reaction of diphenols with, for example, diphenyl carbonate is likewise possible.

Diphenols for the production of the aromatic polycarbonates and/or aromatic polyester carbonates are preferably those of formula (I) 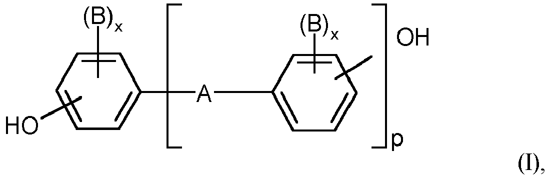 wherein
- A: is a single bond, C₁ to C₅-alkylene, C₂ to C₅-alkylidene, C₅ to C₆-cycloalkylidene, -O-, -SO-, -CO-, -S-, -SO₂-, C₆ to C₁₂-arylene, onto which further aromatic rings optionally comprising heteroatoms may be condensed, or a moiety of formula (II) or (III) 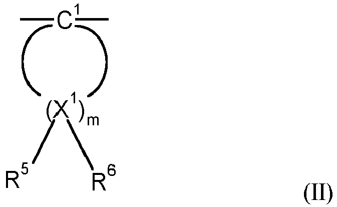 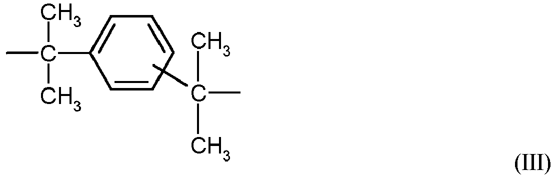
- B: is in each case C₁ to C₁₂-alkyl, preferably methyl, halogen, preferably chlorine and/or bromine,
- x: is independently at each occurrence 0, 1 or 2,
- p: is 1 or 0, and
- R⁵ and R⁶: can be chosen individually for each X¹ and are each independently hydrogen or C₁ to C₆-alkyl, preferably hydrogen, methyl or ethyl,
- X¹: represents carbon and
- m: represents an integer from 4 to 7, preferably 4 or 5, with the proviso that on at least one atom X¹, R⁵ and R⁶ are simultaneously alkyl.

Preferred diphenols are hydroquinone, resorcinol, dihydroxydiphenols, bis(hydroxyphenyl)-C₁-C₅-alkanes, bis(hydroxyphenyl)-C₅-C₆-cycloalkanes, bis(hydroxyphenyl) ethers, bis(hydroxyphenyl) sulphoxides, bis(hydroxyphenyl) ketones, bis(hydroxyphenyl) sulphones and α,α-bis(hydroxyphenyl)diisopropylbenzenes, and also ring-brominated and/or ring-chlorinated derivatives of these.

Particularly preferred diphenols are 4,4'-dihydroxybiphenyl, bisphenol-A, 2,4-bis(4-hydroxyphenyl)-2-methylbutane, 1,1-bis(4-hydroxyphenyl)cyclohexane, 1,1-bis(4-hydroxyphenyl)-3,3,5 - trimethylcyclohexane, 4,4'-dihydroxybiphenyl sulphide, 4,4'-dihydroxybiphenyl sulphone, and also the di- and tetrabrominated or chlorinated derivatives of these, for example 2,2-bis(3-chloro-4-hydroxyphenyl)propane, 2,2-bis(3,5-dichloro-4-hydroxyphenyl)propane or 2,2-bis(3,5-dibromo-4-hydroxyphenyl)propane. 2,2-bis(4-hydroxyphenyl)propane (bisphenol A) is especially preferred.

The diphenols may be used individually or in the form of any desired mixtures. The diphenols are known from the literature or obtainable by processes known from the literature.

The diphenols may be fully or partially replaced by aliphatic diols. Suitable aliphatic diols include diols having 2 to 12 carbon atoms or cycloaliphatic diols having 6 to 21 carbon atoms, for example ethylene-diol, propane-1,2-diol, propane-1,3-diol, 2-ethylpropane-1,3-diol, neopentyl glycol, butane-1,4-diol, pentane-1,5-diol, hexane-1,6-diol, octane-1,8-diol, cyclohexane-1,4-dimethanol, cyclohexane-1,3-dimethanol, cyclohexane-1,2-dimethanol 3-methylpentane-2,4-diol, 2-methylpentane-2,4-diol, 2,2,4-trimethylpentane-1,3-diol and 2-ethylhexane-1,6-diol, 2,2-diethylpropane-1,3-diol, hexane-2,5-diol, 1,4-di([beta]-hydroxyethoxy)benzene, 2,2-bis(4-hydroxycyclohexyl)propane, 2,4-dihydroxy-1,1,3,3-tetramethylcyclobutane, 2,2-bis(3-[beta]-hydroxyethoxyphenyl)propane and 2,2-bis(4-hydroxypropoxyphenyl)propane cyclohexane-1,2-diol, cyclohexane-1,3-diol, cyclohexane-1,4-diol, tetrahydro-2,5 -furanedimethanol, 2-butyl-2-ethyl-1,3 -propanediol, 2-(2-hydroxyethoxy)ethanol, 2,2,4,4-tetramethyl-cyclobutane-1,3-diol, 2,2,4-trimethyl--pentane-1,3-diol, 2,2-dimethylpropane-1,3-diol, cyclobutane-1,1-diyldimethanol, 1,4:3,6 dianhydro-D-glucitol and mixtures thereof.

Within the context of the present invention, the aliphatic and/or aromatic diol used as building block for polycarbonate production and recovered by the process according to the invention is also simply referred to as diol.

Examples of chain terminators suitable for producing the thermoplastic aromatic polycarbonates include phenol, p-chlorophenol, p-tert-butylphenol or 2,4,6-tribromophenol, but also long-chain alkylphenols such as 4-[2-(2,4,4-trimethylpentyl)]phenol, 4-(1,3-tetramethylbutyl)phenol according to DE-A 2 842 005 or monoalkylphenol or dialkylphenols having a total of 8 to 20 carbon atoms in the alkyl substituents, such as 3,5-di-tert-butylphenol, p-isooctylphenol, p-tert-octylphenol, p-dodecylphenol and 2-(3,5-dimethylheptyl)phenol and 4-(3,5-dimethylheptyl)phenol. The amount of chain terminators to be employed is generally between 0.5 mol% and 10 mol% based on the molar sum of the diphenols used in each case.

The thermoplastic aromatic polycarbonates may be branched in a known manner, and preferably through incorporation of 0.05 to 2.0 mol%, based on the sum of the diphenols used, of trifunctional or more than trifunctional compounds, for example those having three or more phenolic groups.

Both homopolycarbonates and copolycarbonates are suitable. Production of inventive copolycarbonates according to component A may also employ 1 to 25% by weight, preferably 2.5 to 25% by weight, based on the total amount of diphenols to be employed, of polydiorganosiloxanes having hydroxyaryloxy end groups. These are known (US 3 419 634) and can be produced by processes known from the literature. The production of copolycarbonates comprising polydiorganosiloxane is described in DE-A 3 334 782. In a preferred embodiment, the aromatic polycarbonates suitable as component A have a weight-average molar mass M_{w} (determined by gel permeation chromatography (GPC) in methylene chloride with polycarbonate as standard) of 10 000 g/mol to 50 000 g/mol, preferably of 22 000 g/mol to 35 000 g/mol, in particular of 24 000 to 32 000 g/mol.

### Component B

Component B is at least one rubber-modified vinyl(co)polymer. The rubber-modified vinyl (co)polymer comprises rubber-based graft polymer and optionally rubber-free vinyl (co)polymer. The rubber-free vinyl (co)polymer is also referred to as free vinyl (co)polymer in the context of the present invention.

The graft polymers employed in component B in accordance with the invention preferably comprise
B.1 5 to 95% by weight, preferably 20 to 92% by weight, in particular 30 to 91% by weight, based on the graft polymer, of at least one vinyl monomer on
B.2 95 to 5% by weight, preferably 80 to 8% by weight, in particular 70 to 9% by weight, based on the graft polymer of one or more rubber-elastic graft substrates having glass transition temperatures < - 10°C, more preferably < -40°C, particularly preferably < -70°C.

Unless expressly stated otherwise in the present invention the glass transition temperature is determined for all components by dynamic scanning calorimetry (DSC) according to DIN EN 61006 (2004 version) at a heating rate of 10 K/min with determination of Tg as the midpoint temperature (tangent method).

The graft substrate B.2 generally has a median particle size (D50) of 0.05 to 10.00 µm, preferably of 0.1 to 5.0 µm, and particularly preferably of 0.1 to 1.5 µm.

The median particle size D50 is the diameter with 50% by weight of the particles above it and 50% by weight below it. Unless expressly stated otherwise in the present invention it is determined for all components by means of ultracentrifuge measurement (W. Scholtan, H. Lange, Kolloid, Z. und Z. Polymere [Polymers] 250 (1972), 782-1796).

Monomers B.1 are preferably mixtures of
- B.1.1: 65 to 85% by weight, particularly preferably 70 to 80% by weight, more preferably 74 to 78% by weight, in each case based on the sum of B.1.1 and B.1.2, of vinylaromatics and/or ring-substituted vinylaromatics (such as styrene, α-methylstyrene, p-methylstyrene, p-chlorostyrene) and/or (C1-C8)-alkyl (meth)acrylates, such as methyl methacrylate, ethyl methacrylate, and
- B.1.2: 15 to 35% by weight, particularly preferably 20 to 30% by weight, more preferably 22 to 26% by weight, in each case based on the sum of B.1.1 and B.1.2, of vinyl cyanides (unsaturated nitriles such as acrylonitrile and methacrylonitrile) and/or (C1-C8)-alkyl (meth)acrylates, such as methyl methacrylate, n-butyl acrylate, t-butyl acrylate, and/or derivates (such as anhydrides and imides) of unsaturated carboxylic acids, for example maleic anhydride.

Preferred monomers B.1.1 are selected from at least one of the monomers styrene, α-methylstyrene and methyl methacrylate; preferred monomers B.1.2 are selected from at least one of the monomers acrylonitrile, maleic anhydride and methyl methacrylate. Particularly preferred monomers are B.1.1 styrene and B.1.2 acrylonitrile. Alternatively preferred monomers are B.1.1 methyl methacrylate and B.1.2 methyl methacrylate.

Suitable graft substrates B.2 of the graft polymers include for example diene rubbers, EP(D)M rubbers, i.e. those based on ethylene/propylene and optionally diene, acrylate, polyurethane, silicone, chloroprene, ethylene/vinyl acetate and also acrylate-silicone composite rubbers.

Preferred graft substrates B.1.2 are diene rubbers, preferably comprising butadiene or copolymers of dienes, preferably comprising butadiene, and further copolymerizable vinyl monomers (e.g. according to B.1.1 and B.1.2) or mixtures of one or more of the abovementioned components.

A particularly preferred graft substrate B.2 is pure polybutadiene rubber. In a further preferred embodiment B.2 is styrene-butadiene rubber, particularly preferably styrene-butadiene block copolymer rubber.

The gel fraction of the graft substrate B.2 is at least 30% by weight, preferably at least 40% by weight, in particular at least 60% by weight, in each case based on B.2 and measured as insoluble fraction in toluene.

The gel content of the graft substrate B.2/of the graft polymers in component B is determined at 25°C in a suitable solvent as content insoluble in these solvents (M. Hoffmann, H. Krömer, R. Kuhn, Polymeranalytik I und II, Georg Thieme-Verlag, Stuttgart 1977).

Most preferred as component B is acrylonitrile-butadiene-styrene (ABS).

The graft copolymers in component B are produced by free-radical polymerization, for example by emulsion, suspension, solution or bulk polymerization. Mixtures of graft polymers produced in different processes may also be used as component B. The graft polymers in component B are preferably produced by emulsion or bulk polymerization.

Suitable graft polymers produced in the emulsion polymerization process are for example ABS polymers produced in the emulsion polymerization process by redox initiation with an initiator system composed of organic hydroperoxide and ascorbic acid according to US-P 4 937 285.

Further suitable graft polymers produced in the emulsion polymerization process are MBS modifiers having a core-shell structure.

Suitable polymers according to component B prepared by bulk polymerization are described for example in DE-OS 2 035 390 (=US PS 3 644 574) or in DE-OS 2 248 242 (=GB-PS 1 409 275), or in Ullmanns, Enzyklopädie der Technischen Chemie, Vol. 19 (1980), p. 280 et seq.

Component B may comprise free, i.e. not chemically bonded to the rubber substrate and not included in the rubber particles, vinyl (co)polymer composed of the monomers according to B.1. This may be formed in component B in the polymerization of the graft polymers owing to the method of production (the grafting on the graft substrate is not necessarily complete) or else polymerized and admixed with component B separately. It is likewise possible for a portion of the free vinyl (co)polymer in component B to originate from the graft polymer itself owing to the method of production and for another portion to be polymerized and admixed with component B separately. The proportion of free vinyl (co)polymer (independent of origin), measured as the acetone-soluble proportion, in component B is, based on component B, preferably at least 5% by weight.

This free vinyl (co)polymer has in the rubber-modified vinyl copolymers according to component B a weight-average molecular weight M_{w} of 30 to 250 kg/mol, preferably of 70 to 200 kg/mol, in particular of 90 to 180 kg/mol.

In the context of the present invention the weight average molecular weight Mw of the free vinyl (co)polymer in component B is measured by gel permeation chromatography (GPC) in tetrahydrofuran against a polystyrene standard.

### Component C

As component C the polycarbonate resin may optionally comprise one or more polymer additives or polymeric components preferably selected from the group consisting of flame retardants, anti-drip agents, flame retardant synergists, smoke inhibitors, lubricants and demoulding agents, nucleating agents, antistats, conductivity additives, stabilizers (e.g. hydrolysis, heat aging and UV stabilizers and also transesterification inhibitors), flow promoters, phase compatibilizers, further polymeric constituents other than components A and B (for example functional blend partners), fillers and reinforcers, and dyes and pigments.

### Production of the moulding compounds and moulded articles

The polycarbonate resins can be produced, for example, by mixing the respective constituents of the compositions (A, B and optionally C) and melt-compounding and melt-extruding them at temperatures of preferably 200°C to 320°C, more preferably at 240°C to 310°C, most preferably at 260°C to 300°C, in customary equipment such as internal kneaders, extruders and twin-shaft screw systems, in known fashion. In the context of this application, this process is generally referred to as compounding.

The term moulding compound is thus understood to mean the product obtained when the constituents of the composition are melt-compounded and melt-extruded.

The individual constituents of the compositions can be mixed in known fashion, either successively or simultaneously, either at about 20°C (room temperature) or at a higher temperature. This means that for example some of the constituents may be added via the main intake of an extruder and the remaining constituents may be applied subsequently in the compounding process via an ancillary extruder.

The polycarbonate resins can be used to produce moulded articles of any kind. These may be produced by injection moulding, extrusion and blow-moulding processes for example. A further form of processing is the production of mouldings by thermoforming from previously produced sheets or films. The moulding compounds according to the invention are particularly suitable for processing by extrusion, blow-moulding and thermoforming methods.

The constituents of the compositions may also be metered directly into an injection moulding machine or into an extrusion unit and processed to mouldings.

### Process details

### Alcohol

In step (i) of the process according to the invention an alcohol is used. The alcohol may have one or more OH-groups. The alcohol may be a primary, secondary or tertiary alcohol and the alcohol may be aliphatic or aromatic. Examples of suitable alcohols include methanol, ethanol, 1-propanol, isopropyl alcohol and tert-butanol. Mixtures of different alcohols may also be employed. The alcohol is preferably selected from methanol, ethanol and mixtures thereof. depolymerization of the polycarbonate is achieved by means of an alcoholysis in step (ii). Alcoholysis with methanol is referred to as methanolysis, whereas alcoholysis with ethanol is referred to as ethanolysis. Most preferred is methanol. Methanol has the advantage of being highly reactive with the polycarbonate resin.

The weight ratio of alcohol to polycarbonate resin in step (i) is preferably 0,8:1 to 12:1, more preferably 0,9:1 to 8:1, most preferred 1:1 to 5:1. An excess of alcohol is preferred as it is used both as solvent and reagent in the alcoholysis of polycarbonate.

In an alternative embodiment a mixture of alcohol and water is used. In this embodiment it is preferred to select an alcohol which is completely miscible with water. Preferably the weight ratio of alcohol to water is 10:90 to 90:10, preferably 25:75 to 75:25, more preferably 40:60 to 60:40.

If a mixture of alcohol and water is used, the weight ratio of the alcohol/water mixture to polycarbonate resin is chosen in a way to fulfill the above-mentioned weight ratio of alcohol to polycarbonate resin. The presence of water during depolymerization of polycarbonate has the advantage of leading to a brighter natural color of the finally obtained bisphenol A crystals. Brighter natural color means that the crystals are less yellow.

Alcoholysis with an aliphatic alcohol of polycarbonate in the absence of water leads to the formation of dialkylcarbonate and diol. Alcoholysis in the presence of water yields CO₂ and diol but no dialkylcarbonate is finally obtained in significant amounts.

### Transesterification catalyst

The alcoholysis of the polycarbonate is carried out in the presence of a transesterification catalyst. It is also feasible to employ mixtures of different transesterification catalysts.

The weight ratio of transesterification catalyst to polycarbonate resin in step (i) is preferably 0.001:1 to 3:1, more preferably 0.01:1 to 2:1, most preferred 0.1:1 to 1:1.

The selected catalyst enables carrying out the polycarbonate depolymerization at the claimed moderate temperatures. Low temperatures are favorable as the properties of the rubber-modified vinyl (co)polymer are better maintained. If the temperatures are too high, in particular the rubber-elastic graft substrate may be damaged and the glass transition temperature shifted to higher values.

The catalyst is preferably selected from the group consisting of titanium compounds, tin compounds, boron compounds, ammonium compounds, phosphonium compounds, silicon compounds, germanium compounds, tin compounds, titanium compounds, antimony compounds, zinc compounds, manganese compounds, zirconium compounds, alkali metal compounds, alkaline earth metal compounds and mixtures thereof,

Further preferred the catalyst is selected from the group consisting of ammonium compounds, alkaline metal compounds and alkaline earth metal compounds and mixtures thereof.

The alkaline earth metal compounds and alkaline metals compounds are selected from the group consisting of hydroxides, hydrides, alkoxides, aryloxides and salts of organic acids including acetic acid, propionic acid, butyric acid, benzoic acid, stearic acid as well as mixtures of these compounds.

The ammonium compounds and phosphonium compounds are selected from the group consisting of tetramethyl ammonium boron hydride, tetrabutylammonium hydroxide, methyltributylammonium hydroxide, tetrabutylammonium acetate, tetrabutylphosphonium hydroxide, tetrabutylphosphonium acetate and tetrabutylphosphonium phenolate and mixtures thereof.

More preferred transesterification catalysts are alkaline metal compounds, in particular alkaline metal hydroxides and methanolates. Further preferred are sodium hydroxide and sodium methanolate.

The most preferred transesterification catalyst is sodium hydroxide. Using this catalyst allows for a sufficiently high depolymerization rate even at low to moderate temperatures.

### Process conditions

The process can be used for polycarbonate resins and molded parts thereof. Polycarbonate resins such originating from e.g. post-industrial waste are usually available in form of pellets. Molded parts collected as post-industrial or post-consumer waste can have many different shapes and sizes. It may be advantageous to reduce the particle size by processes known to the skilled person such as shredding or cutting prior to bringing the molded part into contact with alcohol and transesterification catalyst according to process step (i).

A smaller part size may increase the surface and also the depolymerization rate. Within the context of the present invention all measures to reduce the size of the collected molded parts are referred to as shredding and the obtained molded parts are referred to as shredded molded parts.

The process can be carried out in conventional equipment such as stirred flasks and stirred reactors on laboratory scale and larger scale. A cooler can be connected to the gas phase of the flask or reactor, using a cooling water loop as cooling medium, in order to condense the vapors formed by heating. The reaction can also be performed in a closed flask or reactor. The temperature in the flask or reactor can be adjusted by circulating hot oil or hot water or electrical heating. All these measures are known to the skilled person.

In step (i) slurry (i) is obtained. Within the context of the present invention, a slurry is a mixture comprising liquid and solid constituents. In slurry (i) the polycarbonate resin or the optionally molded part made thereof is the solid constituent whereas the alcohol is the liquid constituent. The transesterification catalyst can be solid or can be dissolved in the liquid fraction.

In step (ii) the polycarbonate is depolymerized by alcoholysis and slurry (ii) is obtained. Slurry (ii) has a lower solid fraction compared to slurry (i) because the depolymerization of polycarbonate leads to recovery of aromatic and/or aliphatic diol and - in the absence of water - dialkylcarbonate which both form part of the liquid phase. At 100 % polycarbonate conversion, i.e. complete depolymerization, the solid phase of slurry (ii) comprises the rubber-modified vinyl (co)polymer and the optional component C.

The depolymerization of the polycarbonate is carried out in a temperature range of 60 to 90 °C, preferably 65 to 85 °C. This means that after the polycarbonate resin or the optionally shredded molded part thereof has been brought into contact with alcohol and transesterification catalyst in step (i) the obtained slurry (i) is heated in step (ii) to the above-mentioned temperature range and kept at this temperature to obtain slurry (ii).

If the temperature is lower than 60 °C, then the depolymerization rate is too low for an economical process. If the temperature is higher than 90°C, the graft substrate of the rubber-modified vinyl (co)polymer may be damaged and the glass transition temperature unfavorably increased.

The process can be performed at ambient pressure, reduced pressure and increased pressure of up to 50 bar. Preferably the process is carried out at ambient pressure.

In a preferred embodiment, the process steps (i) and/or (ii) are carried out with the slurries (i) and/or (ii) being stirred. Stirring can increase the polycarbonate depolymerization rate and reduce the overall process time. Suitable stirrers and are known to the skilled person.

Process step (ii) is preferably carried out for 0.5 to 20 hours, more preferably for 1 to 8 hours, most preferred for 3 to 5 hours. It is further preferred that the depolymerization of the polycarbonate is at least 98 % complete, further preferred at least 99%, most preferred at least 99.5 %. A more complete depolymerization of polycarbonate leads to lower amounts of residual oligocarbonates which may remain in the solid phase as impurity in the recovered rubber-modified vinyl (co)polymer.

This recovered rubber-modified vinyl(co)polymer may be useful as polymeric blend partner for the production of new polycarbonate resins. High fractions of oligomeric substances such as oligocarbonates may lead to impaired properties of these polycarbonate resins such as lower heat distortion temperature. It is also for this reason that a high polycarbonate conversion in the process according to the invention is preferred.

In process step (iii) the solid fraction and the liquid fraction of the slurry (ii) are separated. It is preferred that step (iii) is carried out without adding a solvent to dissolve or to swell the solid fraction or part of the solid fraction. This has the advantage of simplifying the process. By avoiding use of a further solvent less waste is produced and the process is more economical. The separation is preferably done by filtration. The rubber-modified vinyl (co)polymer remains as a solid on the filter.

This solid may then be washed in optional process step (iv). As washing liquid the alcohol employed in the polycarbonate depolymerization and/or water may be used. It is also possible to wash the solid fraction with another washing liquid and/or diluted acid as long as can be easily removed from the solid fraction in a simple drying process.

The separation of the aromatic and/or aliphatic diol and dialkylcarbonate from the liquid fraction in optional step (v) can be carried out by first removing the constituents with lower boiling point, i.e. methanol and/or ethanol and dialkylcarbonate and/or water by evaporation preferably under reduced pressure. Prior to evaporating, the liquid phase may be neutralized or acidified to salt out the catalyst used in the reaction. The remaining solid phase comprises the aromatic and/or aliphatic diol and may also comprise salt from the (optionally neutralized) catalyst. The aromatic and/or aliphatic diol may be dissolved in a solvent mixture suitable to separate the diol and residual salt such as for example water/toluene. Finally, the diol may be obtained by crystallization.

Preferred embodiments of the invention are as follows.
1. Process for recovery of rubber-modified vinyl(co)polymer from a polycarbonate resin or an optionally shredded molded part made thereof wherein the polycarbonate resin comprises
   A) Polycarbonate based on aromatic or aliphatic diol or mixtures thereof
   B) Rubber-modified vinyl(co)polymer
   wherein the process comprises the steps
   i) Bringing into contact the polycarbonate resin or the optionally shredded molded part made thereof with at least one alcohol together with at least one transesterification catalyst to obtain a slurry (i) wherein the solid fraction of the slurry (i) comprises the polycarbonate resin or the optionally shredded molded part made thereof and the liquid fraction of the slurry (i) comprises the alcohol;
   ii) heating the slurry (i) to 60 to 90 °C, preferably 65 to 85 °C and keeping the temperature to obtain a slurry (ii) wherein the solid fraction of the slurry (ii) comprises rubber-modified vinyl(co)polymer and the liquid fraction of the slurry comprises aliphatic and/or aromatic diol;
   iii) separating the solid fraction from the liquid fraction of the slurry (ii);
   iv) optionally washing the solid fraction;
2. Process according to embodiment 1, wherein the weight ratio of alcohol to polycarbonate resin in step (i) is 0.8:1 to 12:1.
3. Process according to embodiment 1, wherein the weight ratio of alcohol to polycarbonate resin in step (i) is 0.9:1 to 8:1.
4. Process according to embodiment 1, wherein the weight ratio of alcohol to polycarbonate resin in step (i) is 1:1 to 5:1.
5. Process according to embodiment any of the further embodiments, wherein slurry (i) further comprises water in a weight ratio of alcohol to water of 10:90 to 90:10.
6. Process according to embodiment 5, wherein the weight ratio of alcohol to water is 25:75 to 75:25.
7. Process according to embodiment 5, wherein the weight ratio of alcohol to water is 40:60 to 60:40.
8. Process according to any of the preceding embodiments, wherein the alcohol employed in step (i) is selected from methanol, ethanol and mixtures thereof.
9. Process according to any of the preceding embodiments, wherein the alcohol is methanol.
10. Process according to any of the preceding embodiments, wherein the transesterification catalyst of titanium compounds, tin compounds, boron compounds, ammonium compounds, phosphonium compounds, silicon compounds, germanium compounds, tin compounds, titanium compounds, antimony compounds, zinc compounds, manganese compounds, zirconium compounds, alkali metal compounds, alkaline earth metal compounds and mixtures thereof,
11. Process according to any of the preceding embodiments, wherein the transesterification catalyst is an alkaline or earth alkaline metal salt.
12. Process according to any of the preceding embodiments, wherein the transesterification catalyst is an alkaline hydroxide or methanolate
13. Process according to any of the preceding embodiments, wherein the transesterification catalyst is sodium hydroxide.
14. Process according to any of the preceding claims, wherein the weight ratio of transesterification catalyst to polycarbonate resin in step (i) is 0.001:1 to 3:1.
15. Process according to any of the preceding claims, wherein the weight ratio of transesterification catalyst to polycarbonate resin in step (i) is 0.01:1 to 2:1.
16. Process according to any of the preceding claims, wherein the weight ratio of transesterification catalyst to polycarbonate resin is in step (i) 0.1:1 to 1:1.
17. Process according to any of the preceding embodiments, wherein the temperature in step (ii) is 65 to 85 °C.
18. Process according to any of the preceding embodiments, wherein step (ii) is carried out for 0.5 to 20 hours.
19. Process according to any of the preceding embodiments, wherein step (ii) is carried out for 1 to 8 hours.
20. Process according to any of the preceding embodiments, wherein step (ii) is carried out for 3 to 5 hours.
21. Process according to any of the preceding embodiments, wherein in step (i) and/or (ii) the slurry (i) and/or (ii) is stirred.
22. Process according to any of the preceding embodiments, wherein step (iii) is carried out without adding a solvent to dissolve or to swell the solid fraction or part of the solid fraction.
23. Process according to any of the preceding embodiments, wherein step (iii) is carried out by filtration.
24. Process according to any of the preceding embodiments, wherein step (iv) is carried out and this step is performed with an alcohol selected from methanol, ethanol, mixtures thereof and optionally water.
25. Process according to any of the preceding embodiments, wherein in a further step (v) is the aromatic and/or aliphatic diol is separated from the liquid fraction
26. Process according to embodiment 25, wherein in step (v) is the diol is separated by crystallization.
27. Process according to any of the preceding embodiments, wherein the polycarbonate is an aromatic polycarbonate comprising structural units derived from bisphenol A
28. Process according to any of the preceding embodiments, wherein the rubber-modified vinyl(co)polymer B comprises
   B.1 5 to 95% by weight, based on component B, of at least one vinyl monomer on
   B.2 95 to 5% by weight, based on component B, of one or more rubber-elastic graft substrates having glass transition temperatures < -10°C, determined by dynamic scanning calorimetry (DSC) according to DIN EN 61006 in the version of 1994 at a heating rate of 10 K/min with determination of Tg as the midpoint temperature.
29. Process according to any of the preceding embodiments, wherein the rubber-modified vinyl(co)polymer is acrylonitrile-butadiene-styrene.
30. Process according to any of the preceding claims, wherein the polycarbonate resin further comprises as component C one or more polymer additives or polymeric components preferably selected from the group consisting of flame retardants, anti-drip agents, flame retardant synergists, smoke inhibitors, lubricants and demoulding agents, nucleating agents, antistats, conductivity additives, flow promoters, phase compatibilizers, further polymeric constituents other than components A and B, fillers and reinforcers, and dyes and pigments.
31. Use of aromatic and/or aliphatic diol recovered in a process according to embodiments 25 or 26 for the production of polycarbonate.
32. Use of rubber-modified vinyl (co)polymer recovered in a process according to any of the embodiments 1 to 30 as blend partner in a polycarbonate blend.
33. Use of rubber-modified vinyl (co)polymer recovered in a process according to any of the embodiments 1 to 30 for the production of molded parts.

### Experimental part

180 g of a PC-ABS blend was prepared on a twin-screw extruder ZSK-25 (Werner & Pfleiderer) at a mass temperature of 260°C from the following components
A) 70 parts by weight of Polycarbonate based on bisphenol-A with a weight average molecular weight (determined by gel permeation chromatography at room temperature using methylene chloride as solvent and bisphenol A polycarbonate standard) of 26000 g/mol (Makrolon^{®} M.2600, Covestro)
B) 30 parts by weight of ABS (Magnum^{™} 3404, Trinseo) containing having an acrylonitrile:butadiene:styrene ratio of 23:10:67. The weight average molecular weight of the free styrene-acrylonitrile copolymer is 160.000 g/mol (measured by gel permeation chromatography (GPC) in tetrahydrofuran against a polystyrene standard)
C) 0.3 parts by weight mold release (Pentaerythritol tetrastearate, Cognis Oleochemicals)) and 0.1 parts by weight thermostabilizer (Irganox^{™} 1076, BASF)

The 180 g of PC-ABS were introduced in a flask of 1000ml equipped with a tap water cooled condenser together with 166,65 g of a 50% by weight NaOH solution in water (Acros Organics, for analysis), 216,66 g of methanol (Sigma Aldrich, for analysis) and 216,66 g of demineralized water to obtain a slurry (i). The slurry (i) was stirred using a magnetic stirrer for 240 minutes at the boiling point of the mixture at ambient pressure, being 77 deg C. After 240 minutes slurry (ii) was obtained , containing solid particles in a liquid solution, and filtrated over a paper prepleated filter (type Whatman 595 ½) with pore size 4 - 7 µm leaving the ABS solid particles on the filter paper. The solid ABS particles were washed with 1200 g of methanol and 5 times with 1600 g of demineralized water. The ABS particles were dried overnight in an oven at 70 degrees C and analyzed as described below.

The liquid fraction, containing the bisphenol A, was acidified with HCl 37 % (supplier: Sigma Aldrich ACS reagent 37%) to a pH between 2 and 3 and the liquid, containing water and methanol were evaporated at a temperature of 90 deg C, starting from ambient pressure going to a reduced pressure of 20 mbara. The remaining solids, containing NaCl and BPA were dissolved in a mixture of 900 g demineralized water and 1200 g toluene (supplier: Merck, for analysis) at 90 deg C. The water phase and toluene phase were separated at 90 deg C through a separation funnel; The toluene fraction was cooled down to a temperature of about 5 deg C; under these conditions the bisphenol A crystallizes from the solvent making it possible to selectively separate the bisphenol A crystals through filtration. For the filtration also a paper prepleated filter (type Whatman 595 ½) with pore size 4 - 7 µm was used.

The quality of the recovered ABS powder was evaluated with regard to glass transition temperature and phase morphology and compared to virgin ABS (Magnum^{™} 3404, Trinseo).

Glass transition temperatures Tg for recovered ABS and virgin ABS were determined by using dynamicmechanical analysis (DMA) in non-resonant torsion mode (shear modulus G^{∗}(T)) according to standard DIN EN ISO 6721-7 at 1Hz frequency with a heating rate of 3K/min in a temperature range from - 150°C to softening of the material as temperatures related to the peak maximum in the loss modulus (G") curve. The results are summarized in table 1.

**Table 1: Glass transition temperatures of recovered ABS and virgin ABS.**

| | | **Recovered ABS** | **Virgin ABS** |
|---|---|---|---|
| Tg (Polybutadiene) | [°C] | -91 | -91 |
| Tg (SAN) | [°C] | 109 | 108 |

As can be seen from table 1, glass transition temperatures for both polybutadiene and SAN are very similar. In particular Tg (polybutadiene) indicates that the rubber graft substrate in the recovered ABS has maintained its elastomeric properties and hence it can be expected that this ABS can be used in standard applications of this material class.

In addition to the mechanical data also phase morphology was investigated.

TEM images were prepared of ultrathin sections of both recovered ABS and virgin ABS after contrasting with OsO4 (created with a Hitachi HT7800). The recovered ABS was available in powder form and had to be dried at 80 °C for at least 4 h and then pressed prior to the preparation of the ultrathin sections. In a control experiment using the ABS raw material it was proven that the pressing procedure had no impact on the morphology.

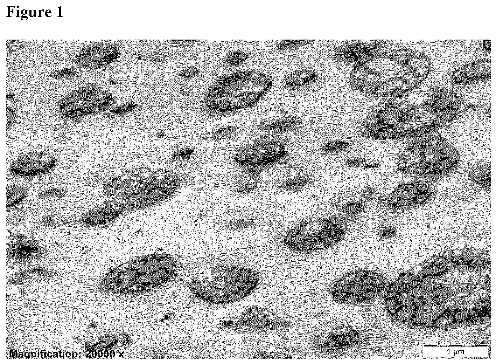

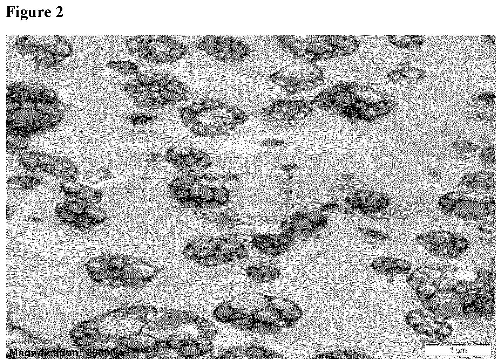

Figure 1 is a TEM image of the recovered ABS whereas figure 2 is a TEM image of the virgin ABS raw material used to prepare the PC-ABS resin.

The images show the same morphology and domain sizes for both ABS materials and give further support that the process according to the invention maintains the properties of rubber-modified vinyl (co)polymers.

## Claims

1. Process for recovery of rubber-modified vinyl(co)polymer from a polycarbonate resin or an optionally shredded molded part made thereof
wherein the polycarbonate resin comprises
A) Polycarbonate based on aromatic or aliphatic diol or mixtures thereof
B) Rubber-modified vinyl(co)polymer
wherein the process comprises the steps
i) Bringing into contact the polycarbonate resin or the optionally shredded molded part made thereof with at least one alcohol together with at least one transesterification catalyst to obtain a slurry (i) wherein the solid fraction of the slurry (i) comprises the polycarbonate resin or the optionally shredded molded part made thereof and the liquid fraction of the slurry (i) comprises the alcohol;
ii) heating the slurry (i) to 60 to 90 °C, preferably 65 to 85 °C and keeping the temperature to obtain a slurry (ii) wherein the solid fraction of the slurry (ii) comprises rubber-modified vinyl(co)polymer and the liquid fraction of the slurry comprises aliphatic and/or aromatic diol;
iii) separating the solid fraction from the liquid fraction of the slurry (ii);
iv) optionally washing the solid fraction;

2. Process according to claim 1, wherein slurry (i) further comprises water in a weight ratio of alcohol to water of 10:90 to 90:10

3. Process according to claim 1 or 2, wherein the alcohol employed in step (i) is methanol.

4. Process according to any of the preceding claims, wherein step (iii) is carried out without adding a solvent to dissolve or to swell the solid fraction or part of the solid fraction.

5. Process according to any of the preceding claims, wherein step (iii) is carried out by filtration.

6. Process according to any of the preceding claims, wherein in a further step (v) is the aromatic and/or aliphatic diol is separated from the liquid fraction

7. Process according to any of the preceding claims, wherein the transesterification catalyst is selected from the group consisting of titanium compounds, tin compounds, boron compounds, ammonium compounds, silicon compounds, germanium compounds, tin compounds, titanium compounds, antimony compounds, zinc compounds, manganese compounds, zirconium compounds, alkali metal compounds, alkaline earth metal compounds and mixtures thereof,

8. Process according to any of the preceding claims, wherein the transesterification catalyst is an alkaline hydroxide or methanolate, preferably sodium hydroxide.

9. Process according to any of the preceding claims, wherein the polycarbonate is an aromatic polycarbonate comprising structural units derived from bisphenol A.

10. Process according to any of the preceding claims, wherein the rubber-modified vinyl(co)polymer is acrylonitrile-butadiene-styrene.

11. Process according to any of the preceding claims, wherein the weight ratio of transesterification catalyst to polycarbonate resin in step (i) is 0.1:1 to 1:1.

12. Process according to any of the preceding claims, wherein the weight ratio of alcohol to polycarbonate resin in step (i) is 0.8:1 to 12:1.

13. Use of aromatic and/or aliphatic diol recovered in a process according to claim 6 for the production of polycarbonate.

14. Use of rubber-modified vinyl (co)polymer recovered in a process according to any of the claims 1 to 12 as blend partner in a polycarbonate blend.

15. Use of rubber-modified vinyl (co)polymer recovered in a process according to any of the claims 1 to 12 for the production of molded parts.
